# EUROPÄISCHE PATENTSCHRIFT

(11) **EP 3 974 167 B1**
(45) Veröffentlichungstag und Bekanntmachung des Hinweises auf die Patenterteilung: **22.11.2023**
(21) Anmeldenummer: 21198734.2
(22) Anmeldetag: 24.09.2021
(51) Int. Cl.: B30B 9/24

(54) **VORRICHTUNG UND VERFAHREN ZUM TRENNEN VON STOFFEN UNTERSCHIEDLICHER FLIESSFÄHIGKEIT**
DEVICE AND METHOD FOR SEPARATING MATERIALS OF VARYING FLOWABILITY
DISPOSITIF ET PROCÉDÉ DE SÉPARATION DES SUBSTANCES PRÉSENTANT DE DIFFÉRENTS COMPORTEMENTS RHÉOLOGIQUES

(30) Priorität: 28.09.2020 DE 102020125225
(43) Veröffentlichungstag der Anmeldung: 30.03.2022
(73) Patentinhaber: NORDISCHER MASCHINENBAU RUD. BAADER GMBH + CO KG, 23560 Lübeck (DE)
(72) Erfinder: FUCHS, Michael, 23560 Lübeck (DE); HÄRTLEIN, Joachim, 23560 Lübeck (DE); KARSTEN, Uwe, 23560 Lübeck (DE); HANF, Friedemann, 23560 Lübeck (DE); SCHWARZ, Olaf, 23560 Lübeck (DE)
(74) Vertreter: Stork Bamberger Patentanwälte PartmbB

(56) Entgegenhaltungen:
- CN-A- 102 986 820
- US-A- 3 734 000

## Beschreibung

Die vorliegende Erfindung betrifft eine Vorrichtung zum Trennen von Stoffen unterschiedlicher Fließfähigkeit, umfassend eine umlaufend angetriebene an einem Antriebselement lösbar angeordnete Hohltrommel mit einer perforierten Mantelfläche, ein von außen an die Hohltrommel unter Umschlingung eines Teils des Umfangs der Hohltrommel anpressbares endloses Pressband, das zusammen mit der Hohltrommel einen Einzugskeil für das Pressgut bildet. Des Weiteren betrifft die Erfindung ein Verfahren zum Betreiben einer Vorrichtung zum Trennen von Stoffen unterschiedlicher Fließfähigkeit.

Derartige Vorrichtungen und Verfahren kommen in verschiedenen Industriebereichen zum Einsatz. Trennbar sind grundsätzlich Materialien, die ein voneinander abweichendes Fließverhalten aufweisen. Zum Einsatz gelangen derartige Vorrichtungen und Verfahren beispielsweise bei der Verwertung von Tierkörpern zum Abtrennen von Haut-, Fleisch- und/oder Sehnenanteilen von Knochen oder Gräten. Auch bei der Trennung des Fruchtfleisches von Schale, Stielen, Kernen oder Steinen von Gemüse oder Obst kommen diese zum Einsatz. Ein weiteres Einsatzfeld besteht in der Trennung von Verbundverpackungen, beispielsweise von Karton-Getränkeverpackungen, die aus mit Kunststofffolie und/oder Aluminiumfolie beschichteten Kartons bestehen.

Die auch als Presstrennmaschinen bezeichneten Vorrichtungen zum Trennen von Stoffen unterschiedlicher Fließfähigkeit umfassen in der Regel eine mit einer perforierten Mantelfläche versehene Hohltrommel und ein mit der Hohltrommel in einem Teilumfangsbereich in Wirkverbindung stehendes Pressband. Insbesondere die Hohltrommel wird über ein Antriebselement angetrieben. Häufig wird zudem das Pressband umlaufend angetrieben. Das zu trennende Pressgut gelangt in einen Einzugsbereich zwischen das elastische Pressband und die perforierte Hohltrommel. Derartige perforierte Hohltrommeln werden auch als Lochtrommeln bezeichnet. Das Pressband bildet zusammen mit der Hohltrommel in diesem Einzugsbereich einen Einzugskeil für das Pressgut. Infolge unterschiedlicher Fließfähigkeiten der Teilbestandteile des Pressgutes werden fließfähigere Bestandteile durch die perforierte Mantelfläche der Hohltrommel von außen nach innen gedrückt. Derartige Vorrichtungen und Verfahren sind bereits hinlänglich bekannt, beispielsweise aus den Dokumenten DE 20 2004 014365 U1 und DE 20 2007 004473 U1. US 3 734 000 A offenbart beispielsweise eine Vorrichtung bzw. ein Verfahren nach dem Oberbegriff des Anspruchs 1 bzw. Anspruchs 14.

Regelmäßig ist es erforderlich, die Hohltrommel von dem Antriebselement zu Reinigung-, Wartung- und/oder Austauschzwecken zu lösen. Ein Nachteil der bekannten Vorrichtungen und Verfahren besteht darin, dass die Hohltrommel mit dem Antriebselement mittels Schraubenverbindung lösbar verbunden ist. Eine solche Verbindung wird entweder über eine zentrale Mutter oder mehrere am Hohltrommelboden verteilte Schrauben oder Muttern realisiert. Um diese Verbindung zu lösen ist einerseits stets der Einsatz von Werkzeugen erforderlich. Anderseits verschmutzen die im Innenraum der Hohltrommel angeordneten Schraubenköpfe, Muttern oder Gewinde, sodass deren einwandfreie Funktion nicht stets gewährleistet werden kann.

Zudem ist es regelmäßig erforderlich, die jeweiligen Teile der Schraubverbindung zunächst von anhaftenden Bestandteilen des Pressguts zu reinigen, bevor die Werkzeuge zum Lösen der Schraubverbindung überhaupt angesetzt werden können. Häufig führen derartige Verunreinigung bzw. auch nach der Vorreinigung verbleibende Reste zu einem Abrutschen der Werkzeuge.

Ein weiterer Nachteil besteht darin, dass beim Anziehen derartiger Schraubverbindungen die jeweiligen Anzugsmomente stark streuen. Werden die erforderlichen Haltemomente beim Anziehen nicht erreicht, so besteht die Gefahr, dass sich die Hohltrommel von dem Antriebselement unbeabsichtigt lösen und zur Beschädigung der Maschine und/oder zu einer Verletzung des Maschinenführers führen kann.

Es ist daher Aufgabe der vorliegenden Erfindung, eine Vorrichtung der eingangs genannten Art vorzuschlagen, die eine möglichst komfortable, einfach durchführbare Montage und Demontage der Hohltrommel an und von dem Antriebselement erlaubt, wobei gleichzeitig sichergestellt ist, dass die Hohltrommel an dem Antriebselement im montierten Zustand zuverlässig gegen unbeabsichtigtes Lösen von dem Antriebselement gesichert ist. Zudem ist es Aufgabe der vorliegenden Erfindung eine Vorrichtung bereitzustellen, die eine werkzeuglose Montage sowie Demontage der Hohltrommel ermöglicht. Des Weiteren besteht die Aufgabe darin, ein entsprechendes Verfahren vorzuschlagen.

Die Aufgabe wird durch eine Vorrichtung mit den eingangs genannten Merkmalen dadurch gelöst, dass das Antriebselement gemäß der Kennzeichnung des Anspruchs 1 mindestens ein steuerbewegliches Haltemittel umfasst, das zum steuerbaren Arretieren der Hohltrommel an dem Antriebselement sowie zum steuerbaren Lösen der Hohltrommel von dem Antriebselement ausgebildet und eingerichtet ist. Die Kennzeichnung des Anspruchs 14 weist entsprechende Verfahrensmerkmale auf.

Vorteilhafterweise ist es so erstmals möglich, die Verbindung zwischen dem Antriebselement und der Hohltrommel auf besonders komfortable Weise, insbesondere werkzeugfrei, bei Bedarf zu lösen bzw. wiederherzustellen. Zudem ist so stets gewährleistet, dass die Hohltrommel nach dem Arretieren mittels des steuerbeweglichen Haltemittels zuverlässig gegen ein unbeabsichtigtes Lösen der Verbindung zwischen der Hohltrommel und dem Antriebselement gesichert ist. Mittels der erfindungsgemäßen Vorrichtung wird stets sichergestellt, dass die Hohltrommel über das steuerbewegliche Haltemittel mit der erforderlichen Vorspannung gegen das Antriebselement gedrückt und somit mit diesem sicher arretiert ist.

Eine zweckmäßige Ausgestaltung der Erfindung ist dadurch gekennzeichnet, dass das Antriebselement eine Hohltrommelaufnahme umfasst und ein Rückwandelement der Hohltrommel eine zur form- und/oder kraftschlüssigen Aufnahme des Hohltrommelaufnahme eingerichtete Ausnehmung aufweist. Anders ausgedrückt ist die Hohltrommelaufnahme als Aufnahmewelle ausgebildet, auf die die Hohltrommel mittels der Ausnehmung in dem Rückwandelement aufsetzbar eingerichtet ist. Vorteilhafterweise kann die Hohltrommel so auf einfache und komfortable Weise an dem Antriebselement angeordnet und gegebenenfalls wieder von diesem gelöst werden. Vorzugsweise ist die lichte Weite der Ausnehmung in dem Rückwandelement auf den Außendurchmesser der Hohltrommelaufnahme entsprechend abgestimmt.

Eine bevorzugte Weiterbildung der Erfindung zeichnet sich dadurch aus, dass die Hohltrommelaufnahme hohlwellenartig, einen Innenraum bildend, eingerichtet ist und das Haltemittel ein Zapfenelement umfasst, das in dem Innenraum der Hohltrommelaufnahme längsaxial steuerbeweglich angeordnet ist. Die Hohltrommelaufnahme erfüllt damit eine Doppelfunktion: Einerseits dient die Mantelfläche der Hohltrommelaufnahme als Aufnahmewelle für die Hohltrommel, andererseits befindet sich in dem Innenraum der Hohltrommelaufnahme das als Zapfenelement ausgebildete Haltemittel. Das Zapfenelement ist auf diese Weise gegenüber mechanischen Beschädigungen von außen geschützt angeordnet.

Zugleich ist die hohlwellenartig ausgebildete Hohltrommelaufnahme möglichst kompakt eingerichtet. Die für die längsaxiale Steuerbeweglichkeit des Zapfenelements erforderlichen Komponenten sind zudem durch die Anordnung in dem Innenraum der Hohltrommelaufnahme zuverlässig gegen Verschmutzungen geschützt, insbesondere durch solche, die durch vorhandenes Pressgut in der Hohltrommel verursacht werden. Hierdurch ist eine besonders hohe Zuverlässigkeit bei der Arretierung der Hohltrommelaufnahme mit dem Antriebselement mittels des Haltemittels bzw. des Zapfenelement stets sichergestellt. Zugleich wird durch die räumliche Trennung den hohen hygienischen Anforderungen im Bereich der Lebensmittelverarbeitung Genüge getan.

Eine weitere zweckmäßige Ausbildung der Erfindung ist dadurch gekennzeichnet, dass das Zapfenelement an seinem freien Ende zur Aufnahme eines lösbaren Verschlusselements eingerichtet ist. Mittels des genannten Verschlusselements ist es möglich, die Hohltrommel nach dem Aufsetzen auf die Hohltrommelaufnahme gegen ein unbeabsichtigtes Lösen von dem Antriebselement vorläufig zu sichern. Dazu wird das Verschlusselement an dem freien Ende des Zapfenelement angeordnet. Dies erfolgt vorzugsweise händisch, sodass hierzu kein Werkzeugeinsatz erforderlich ist. Die eigentliche Arretierung der Hohltrommelaufnahme an dem Antriebselement, mit der beide drehfest miteinander verbunden werden, erfolgt erst durch das Verfahren des Zapfenelement mittels des steuerbeweglichen Haltemittels in eine Arretier-Position. Hierdurch wird das auf dem freien Ende des Zapfenelements angeordnete Verschlusselement in Richtung des Antriebselement mittels des steuerbeweglichen Haltemittels zum Arretieren desselben vorgespannt.

Gemäß einer weiteren bevorzugten Ausbildung der Erfindung weist das Verschlusselement einen zum lösbaren Verbinden mit dem freien Ende des Zapfenelements eingerichteten Bajonettverschluss auf. Ein solcher Bajonettverschluss bietet den Vorteil, dass das Verschlusselement mittels einfachen Handgriffes an dem freien Ende des Zapfenelement angeordnet oder von diesem wieder gelöst werden kann. So kann die Hohltrommel auf komfortable Weise bei der Montage vorgesichert werden, bevor mittels des steuerbeweglichen Haltemittels die endgültige Arretierung der Hohltrommel an dem Antriebselement erfolgt.

Gemäß einer weiteren bevorzugten Ausführungsform weisen das Verschlusselement und das freie Ende des Zapfenelements jeweils Gewinde auf, so dass das Verschlusselement an das freie Ende des Zapfenelements schraubbar eingerichtet ist. Vorteilhafterweise kann so das Verschlusselement händisch durch einfaches Aufschrauben an dem Zapfenelement werkzeuglos angeordnet werden. In ebenso einfacher Weise lässt sich das Verschlusselement von dem Zapfenelement abschrauben, um das Verschlusselement von dem Zapfenelement endgültig zu lösen. Insbesondere ist das Verschlusselement als Verschlussmutter ausgebildet und das freie Ende weist ein zur Aufnahme der Verschlussmutter eingerichtetes Außengewinde auf.

Eine bevorzugte Weiterbildung der Erfindung zeichnet sich dadurch aus, dass das Zapfenelement mittels einer Verstelleinheit mechanisch derart verbunden ist, dass die Position des Zapfenelements steuervariabel positionsverstellbar eingerichtet ist. Über die Verstelleinheit kann die Position des Zapfenelements gesteuert werden, nämlich in eine Arretierungs-Position und eine Lose-Position. In der Arretierungs-Position wird mittels der Verstelleinheit das Zapfenelement so verfahren, dass über das Verschlusselement die Hohltrommel gegen das Antriebselement gespannt wird. Soll die Verbindung zwischen der Hohltrommel und dem Antriebselement gelöst werden, so wird mittels der Verstelleinheit das Zapfenelement in die Lose-Position verfahren, in der das Verschlusselement jedenfalls kräftefrei an dem Rückwandelement der Hohlrommel anliegt, oder bereits von diesen beanstandet ist. In diesem Zustand kann das Verschlusselement händisch von der Hohltrommelaufnahme gelöst werden, sodass die Hohltrommel von der Hohltrommelaufnahme vollständig gelöst werden kann.

Eine weitere zweckmäßige Ausbildung der Erfindung ist dadurch gekennzeichnet, dass die Verstelleinheit eine Hydraulikeinheit, eine Pneumatikeinheit oder eine elektrische Linearmotoreinheit ist. Die Ausführung als hydraulische Verstelleinheit bietet den Vorteil, dass die erforderliche Vorspannung zur Arretierung der Hohltrommelaufnahme an dem Antriebselement über den jeweiligen Hydraulikdruck vorgebbar ist. Zudem ist eine solche Hydraulikeinheit bei vergleichsweise kompakter Bauweise in der Lage, die erforderlichen Kräfte zur Bereitstellung einer adäquaten Vorspannung zur Verfügung zu stellen.

Ein weiterer Vorteil besteht in der robusten und wenig störanfälligen Bauart solcher Hydraulikeinheiten. Alternativ ist die Verstelleinheit als pneumatische Einheit ausgeführt, kann aber auch als Linearmotoreinheit ausgebildet sein. Vorzugsweise ist die Verstelleinheit in dem Innenraum angeordnet und auf diese Weise gekapselt eingerichtet.

Eine weitere zweckmäßige Ausgestaltung der Erfindung ist dadurch gekennzeichnet, dass die Hydraulikeinheit einen Zweikammerhydraulikzylinder umfasst. Dies bietet den Vorteil, dass eine aktive Verstellung des Zapfenelements in zwei Richtungen, nämlich einerseits zu dem Antriebselement hin zum Arretieren der Hohltrommel an dem Antriebselement und andererseits von dem Antriebselement weg zum Lösen der Verbindung zwischen der Hohltrommelaufnahme und dem Antriebselement, ermöglicht wird. Auf diese Weise wird insbesondere beim Lösen der Verbindung zwischen der Hohltrommelaufnahme und dem Antriebselement sichergestellt, dass das Verschlusselement von dem Rückwandelement der Hohltrommel freikommt, sodass das Verschlusselement werkzeugfrei von dem Zapfenelement gelöst werden kann.

Gemäß einer weiteren bevorzugten Ausbildung der Erfindung ist das Verschlusselement hohltrommelseitig konisch ausgebildet, insbesondere umfasst die Ausnehmung in dem Rückwandelement der Hohltrommel mindestens einen Durchgangsausnehmungsabschnitt und eine konische Zentrierausnehmung. Vorteilhafterweise bewirkt das konisch ausgebildete Verschlusselement zusammen mit dem mindestens einen Durchgangsausnehmungsabschnitt ein Zentrieren der Hohltrommelaufnahme beim Arretiervorgang. Dies bietet den Vorteil einer automatischen Selbstzentrierung der Hohltrommel.

Weiterhin wird die Aufgabe durch ein entsprechendes Verfahren mit den eingangs genannten Merkmalen dadurch gelöst, dass das Arretieren der Hohltrommel an dem Antriebselement sowie das Lösens von dem Antriebselement mittels eines steuerbeweglichen Haltemittels gesteuert wird. Die mit dem erfindungsgemäßen Verfahren verbundenen Vorteile wurden zuvor bereits anhand der erfindungsgemäßen Vorrichtung im Detail beschrieben. Zur Vermeidung von Wiederholungen wird an dieser Stelle im Zusammenhang mit dem erfindungsgemäßen Verfahren auf die bereits zuvor genannten Vorzüge der erfindungsgemäßen Vorrichtung verwiesen. Diese gelten in analoger Weise auch für das erfindungsgemäße Verfahren.

Eine weitere zweckmäßige Ausbildung der Erfindung ist gekennzeichnet durch gesteuertes längsaxiales Bewegen eines Zapfenelements des Haltemittels in einem Innenraum der Hohltrommelaufnahme, die hohlwellenartig ausgebildet ist.

Eine bevorzugte Weiterbildung der Erfindung zeichnet sich durch Anordnen des Verschlusselements am freien Ende des Zapfenelements aus.

Gemäß einer weiteren bevorzugten Ausbildung der Erfindung ist das Verschlusselement mittels eines Bajonettverschlusses an dem freien Ende des Zapfenelements angeordnet.

Gemäß einer weiteren bevorzugten Ausführungsform ist das Verschlusselement mit dem freien Ende des Zapfenelements, vorzugsweise nur handfest, verschraubt.

Eine weitere zweckmäßige Ausgestaltung der Erfindung ist gekennzeichnet durch gesteuertes Verstellen der Position des Zapfenelement mittels einer Verstelleinheit, mit der das Zapfenelement mechanisch verbunden ist.

Gemäß einer weiteren bevorzugten Ausbildung der Erfindung erfolgt das Verstellen der Position mittels der Verstelleinheit hydraulisch, pneumatisch und/oder linear elektromotorisch.

Gemäß einer weiteren bevorzugten Ausbildung der Erfindung wird die Verstelleinheit in dem Innenraum gesteuert bewegt.

Auch für die zuvor genannten vorteilhaften Ausbildungen des erfindungsgemäßen Verfahrens wird hinsichtlich deren Vorteile auf die obigen Ausführungen zu den Vorzügen der erfindungsgemäßen Vorrichtung verwiesen.

Diese gelten für die genannten vorteilhaften Ausbildungen des erfindungsgemäßen Verfahrens in gleicher Weise, wie für die bereits beschriebenen Vorzüge der vorteilhaften Ausbildungen der erfindungsgemäßen Vorrichtung.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine perspektivische Ansicht der erfindungsgemäßen Vorrichtung,
- Fig. 2: die in Figur 1 gezeigte Vorrichtung mit abgenommener Hohltrommel,
- Fig. 3: eine Seitenansicht im Schnitt der Vorrichtung bei abgenommener Hohltrommel und gelöstem Verschlusselement,
- Fig. 4: eine Seitenansicht im Schnitt der Vorrichtung bei montierter Hohltrommel mit nicht arretiertem Halteelement,
- Fig. 5: eine Seitenansicht im Schnitt der Vorrichtung bei montierter Hohltrommel während der Arretierung des Halteelements und
- Fig. 6: eine Seitenansicht im Schnitt der Vorrichtung bei montierter Hohltrommel mit arretiertem Halteelement.

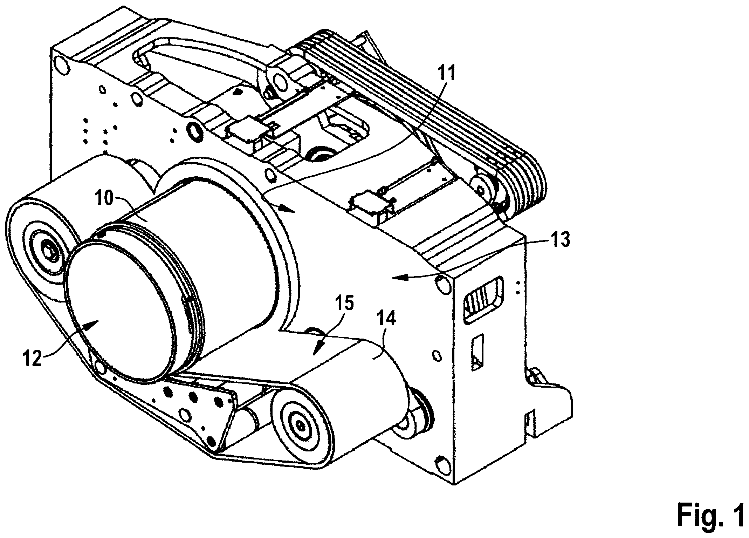

In Figur 1 ist eine perspektivische Ansicht der erfindungsgemäßen Vorrichtung gezeigt. Die Vorrichtung umfasst eine Hohltrommel 10, die mittels eines - in Figur 1 nur zum Teil gezeigten - Antriebselements 11 umlaufend angetrieben wird. Die Hohltrommel 10 weist eine - in der Zeichnung nicht gezeigte - perforierte Mantelfläche auf, durch die Anteile des Pressguts mit größerer Fließfähigkeit in einen Innenraum 12 gelangen, während diejenigen Anteile des Pressguts mit einer geringeren Fließfähigkeit im Außenraum 13 der Hohltrommel 10 verbleiben.

Die Vorrichtung umfasst weiter ein endloses Pressband 14. Das Pressband 14 ist eingerichtet, von außen gegen die Hohltrommel 10 unter Umschlingung eines Teils der Hohltrommel 10 gepresst zu werden. Das Pressband 14 bildet so zusammen mit der Hohltrommel 10 einen Einzugskeil 15 für das Pressgut.

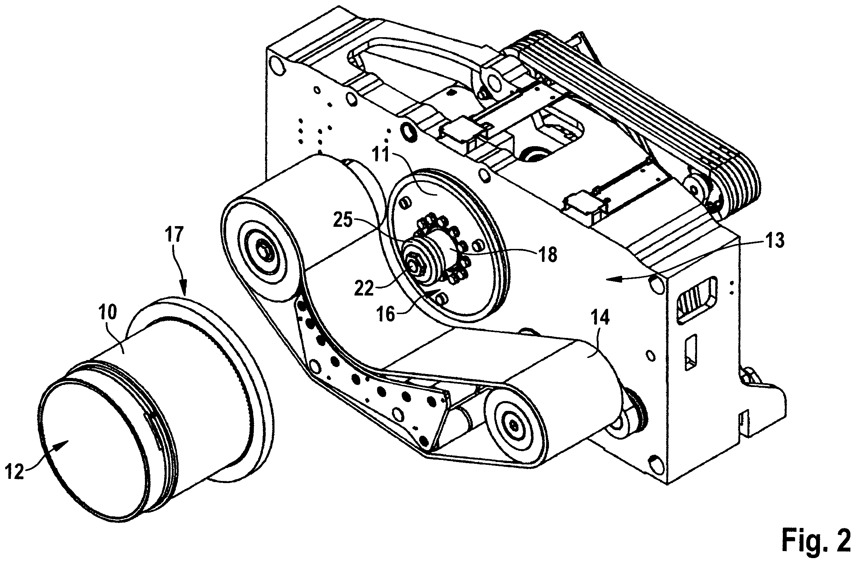

Wie in Figur 2 gezeigt, ist die Hohltrommel 10 lösbar an dem Antriebselement 11 angeordnet. Auf diese Weise kann die Hohltrommel 10 zu Wartung- und Austauschzwecken ein- und ausgebaut werden. Das Antriebselement 11 umfasst mindestens ein steuerbewegliches Haltemittel 16. Das Haltemittel 16 ist ausgebildet, die Hohltrommel 10 an dem Antriebselement 11 steuerbar zu arretieren oder von dem Antriebselement 11 steuerbar zu lösen. Auf diese Weise ist eine Demontage bzw. Montage der Hohltrommel 10 möglich, bei der die Arretierung bzw. das Lösen der Hohltrommel 10 mittels des steuerbewegliches Haltemittel 16 bewirkt wird. Ist die Hohltrommel 10 an dem Antriebselement 11 arretiert, so bilden diese eine drehfeste Einheit.

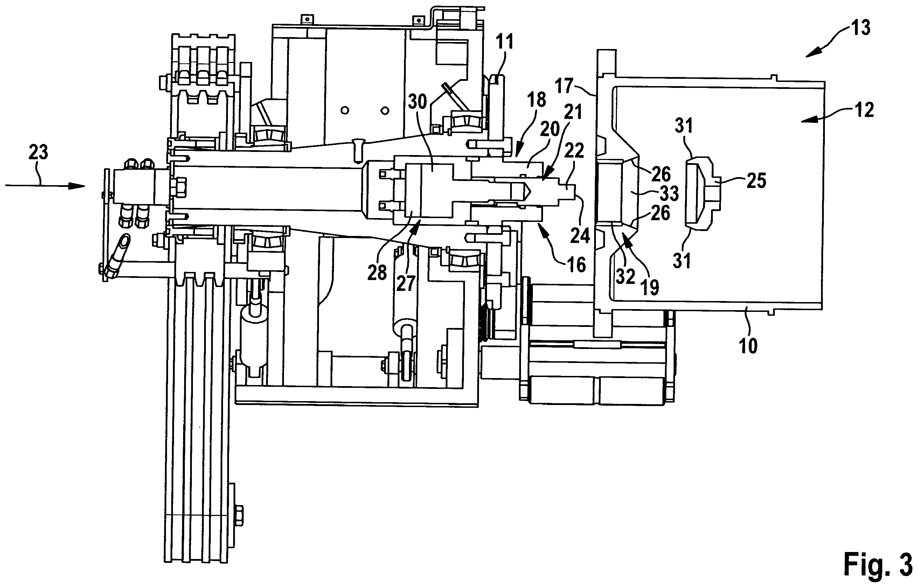

Die in Fig.3 gezeigten Schnittdarstellung zeigt die erfindungsgemäße Vorrichtung bei abgenommener Hohltrommel 10. Die Hohltrommel 10 weist ein Rückwandelement 17 auf. Das Rückwandelement 17 begrenzt den Innenraum 12 in der Hohltrommel 10 zur Seite des Antriebselements 11 hin. Das Antriebselement 11 umfasst weiter eine Hohltrommelaufnahme 18. Die Hohltrommelaufnahme 18 bildet ein Zentrier- und Befestigungselement, um die Hohltrommel 10 mit dem Antriebselement 11 lösbar zu verbinden. Das Rückwandelement 17 der Hohltrommel 10 weist hierzu eine Ausnehmung 19 auf, die zur Form- und/oder kraftschlüssigen Aufnahme der Hohltrommelaufnahme 18 eingerichtet ist.

Vorzugsweise ist die Hohltrommelaufnahme 18 hohlwellenartig ausgebildet, umfasst also eine Hohlwelle 20, die einen Innenraum 21 bildet. Das Haltemittel 16 umfasst ein Zapfenelement 22, das in den Innenraum 21 der Hohltrommelaufnahme 18 bzw. dessen Hohlwelle 20 in Längsaxialrichtung 23 steuerbeweglich angeordnet ist. Anders ausgedrückt ist das Zapfenelement 22 derart eingerichtet, dass dieses in der Längsaxialrichtung 23 positionsveränderbar steuerbeweglich eingerichtet ist.

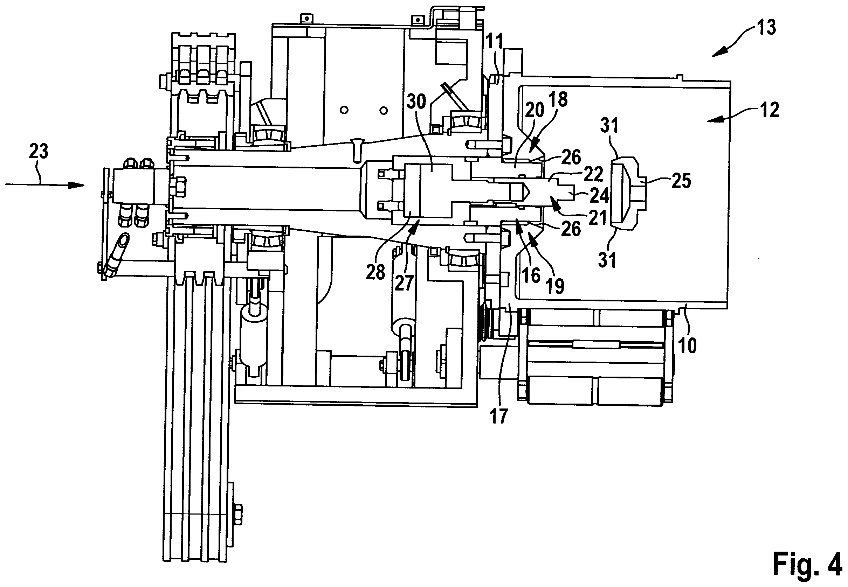

Wie in Figur 4 gezeigt, kann die Hohltrommel 10 mit ihrer Ausnehmung 19 bei der Montage auf die Hohltrommelaufnahme 18 gesetzt werden. Die Hohltrommelaufnahme 18 durchgreift dabei die Ausnehmung 19. Vorzugsweise ist das Zapfenelement 22 an seinem freien Ende 24 zur Aufnahme eines lösbaren Verschlusselements 25 ausgebildet und eingerichtet. Das Verschlusselement 25 ist derart eingerichtet, dass es in jedem Fall die Ausnehmung 19 in radialer Richtung zumindest teilweise überdeckt. Auf diese Weise bildet das Verschlusselement 25 eine Art Klemmelement, mittels dessen die Hohltrommel 10 durch Positionieren des Zapfenelements 22 in Richtung des Antriebselements 11 mit dem Antriebselement 11 arretierbar eingerichtet ist. Durch Bewegen des Zapfenelements 22 in entgegengesetzter Richtung wird der Klemmverbund gelöst, und die Arretierung der Hohltrommel 10 an dem Antriebselement 11 aufgehoben.

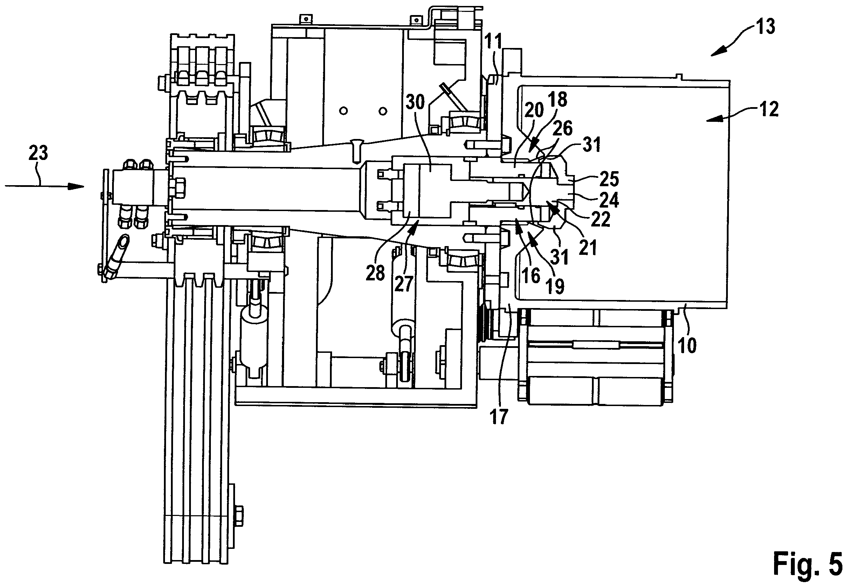

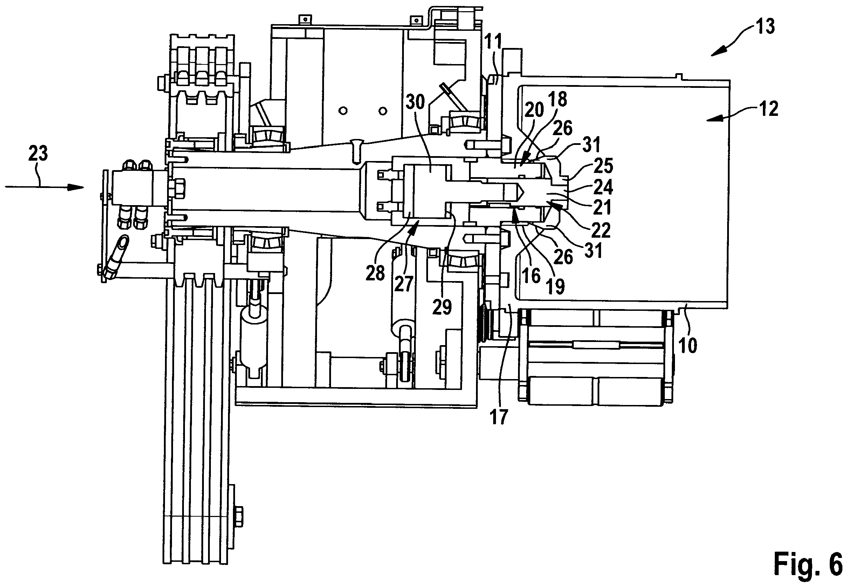

Der Vorgang des Arretierens der Hohltrommel 10 an dem Antriebselement 11 wird anhand der Figuren 5 und 6 schrittweise dargestellt. Wie in der Zeichnung dargestellt, ist die Ausnehmung 19 in dem Rückwandelement 17 der Hohltrommel 10 vorzugsweise als eine Durchgangsausnehmung mit konischen Klemmflächen 26 ausgebildet. Die Durchgangsausnehmung ist - wie in der Zeichnung dargestellt - in Richtung des Antriebselements 11 sich verjüngend ausgebildet. Dies bietet den Vorteil, dass das Verschlusselement 25 sich beim Bewegen des Zapfenelements 22 in Richtung des Antriebselements 11 schließlich in die - in Figur 6 gezeigte - Klemmsitzanlage gelangt, in der die Hohltrommel 10 drehfest mit dem Antriebselement 11 über den aus Zapfenelement 22, dem Verschlusselement 25 und der Ausnehmung 19 gebildeten Klemmverbund verbunden sind.

Das Verschlusselement 25 ist an dem Zapfenelement 22 lösbar eingerichtet. Beispielsweise weisen das Verschlusselement 25 und das freie Ende 24 des Zapfenelements 22 jeweils Gewinde auf, so dass das Verschlusselement 25 an das freie Ende 24 des Zapfenelements - wie in der Zeichnung dargestellt - schraubbar eingerichtet ist. Besonders bevorzugt ist das Verschlusselement 25 als Verschlussmutter ausgebildet und das freie Ende 24 weist ein zur Aufnahme der Verschlussmutter eingerichtetes Außengewinde auf.

Gemäß einer - in der Zeichnung nicht gezeigten - alternativen Ausführung der Erfindung weist das Verschlusselement 25 einen Bajonettverschluss auf, mittels dessen das Verschlusselement 25 lösbar mit dem freien Ende 24 des Zapfenelements 22 verbindbar eingerichtet ist.

Das Zapfenelement 22 ist mit einer Verstelleinheit 27 mechanisch derart verbunden bzw. gekoppelt, dass die Position des Zapfenelements 22 steuervariabel positionsverstellbar eingerichtet ist. Anders ausgedrückt ist die Verstelleinheit 27 eingerichtet, die Position des Zapfenelements 22 steuervariabel in der Längsaxialrichtung 23 zu verändern. Vorzugsweise ist die Verstelleinheit 27 als eine Hydraulikeinheit oder eine Pneumatikeinheit ausgebildet.

Alternativ ist die Verstelleinheit 27 als eine - in der Zeichnung nicht gezeigte - elektrische Linearmotoreinheit ausgebildet, die beispielsweise einen Servomotor umfasst, mittels dessen die gewünschten Positionen des Zapfenelements 22 in der Längsaxialrichtung 23 steuervariabel anfahrbar sind. Vorzugsweise ist die Verstelleinheit 27 in dem Innenraum 21 der Hohlwelle 20 angeordnet.

Beispielsweise umfasst eine solche Hydraulik- bzw. Pneumatikeinheit ein Zwei-Kammersystem mit einer ersten Kammer 28 und einer zweiten Kammer 29, die durch einen in der Längsaxialrichtung 23 schiebebeweglich angeordneten Kolben 30 voneinander getrennt sind. Durch gesteuerte Druckbeaufschlagung der jeweiligen ersten und zweiten Kammern 28, 29 ist die Position des Kolbens 30 in der Längsaxialrichtung 23 veränderbar eingerichtet und das mit dem Kolben 30 mechanisch in Verbindung stehende Zapfenelement 22 in seiner Position entsprechend verfahrbar ausgebildet. Der Kolben 30 der Hydraulikoder Pneumatikeinheit ist daher insbesondere als Zweikammerhydraulikzylinder eingerichtet.

Vorzugsweise ist das Verschlusselement 25 zumindest lochtrommelseitig konisch ausgebildet und weist daher eine konische Anlagefläche 31 auf. Vorzugsweise ist die Anlagefläche 31 korrespondierend zu der Geometrie der Ausnehmung 19, die - wie zuvor beschrieben - als sich verjüngend Durchgangsausnehmung ausgebildet ist, eingerichtet, sodass die Anlagefläche 31 beim Arretieren der Hohltrommel 10 in Flächenanlage gelangt.

Wie in Figur 3 ersichtlich, weist die Ausnehmung 19 in dem Rückwandelement 17 der Hohltrommel 10 mindestens einen Durchgangsausnehmungsabschnitt 32 sowie eine konische Zentrierausnehmung 33 auf. Im Bereich des Durchgangsausnehmungsabschnitts 32 ist die Ausnehmung 19 des Rückwandelements 17 vorzugsweise zylindrisch ausgebildet und deren Innendurchmesser auf das Außenmaß der Hohlwelle 20 abgestimmt, sodass die Hohltrommel 10 auf die Hohlwelle 20 mit entsprechender Passung aufgesteckt bzw. wieder von dieser gelöst werden kann. Die Zentrierausnehmung 33 ist ausgehend vom Innendurchmesser der Ausnehmung 19 im Bereich des Durchgangsausnehmungsabschnitt 32 zu dem Verschlusselement 25 hin sich konisch weitend ausgebildet. Das Verschlusselement 25 wirkt mit der Zentrierausnehmung 33 als Zentrierhilfe zur zentrierenden Ausrichtung der Hohltrommel 10 auf der Hohlwelle 20.

Die vorliegende Erfindung wird anhand des Vorstehenden im Wesentlichen im Zusammenhang mit der erfindungsgemäßen Vorrichtung erläutert. Die zuvor gemachten Ausführungen gelten jedoch in analoger Weise auch für das erfindungsgemäße Verfahren, sodass hierauf an dieser Stelle verwiesen wird.

## Patentansprüche

1. Vorrichtung zum Trennen von Stoffen unterschiedlicher Fließfähigkeit, umfassend eine umlaufend angetriebene an einem Antriebselement (11) lösbar angeordnete Hohltrommel (10) mit einer perforierten Mantelfläche, ein von außen an die Hohltrommel (10) unter Umschlingung eines Teils des Umfangs der Hohltrommel (10) anpressbares endloses Pressband (14), das zusammen mit der Hohltrommel (10) einen Einzugskeil (15) für das Pressgut bildet,
**dadurch gekennzeichnet, dass**
das Antriebselement (11) mindestens ein steuerbewegliches Haltemittel (16) umfasst, das zum steuerbaren Arretieren der Hohltrommel (10) an dem Antriebselement (11) sowie zum steuerbaren Lösen der Hohltrommel (10) von dem Antriebselement (11) ausgebildet und eingerichtet ist.

2. Vorrichtung nach Anspruch 1, **dadurch gekennzeichnet, dass** das Antriebselement (11) eine Hohltrommelaufnahme (18) umfasst und ein Rückwandelement (17) der Hohltrommel (10) eine zur form- und/oder kraftschlüssigen Aufnahme der Hohltrommelaufnahme (18) eingerichtete Ausnehmung (19) aufweist.

3. Vorrichtung nach Anspruch 2, **dadurch gekennzeichnet, dass** die Hohltrommelaufnahme (18) hohlwellenartig, einen Innenraum (21) bildend, eingerichtet ist und das Haltemittel (16) ein Zapfenelement (22) umfasst, das in dem Innenraum (21) der Hohltrommelaufnahme (18) längsaxial steuerbeweglich angeordnet ist.

4. Vorrichtung nach Anspruch 3, **dadurch gekennzeichnet, dass** das Zapfenelement (22) an seinem freien Ende (24) zur Aufnahme eines lösbaren Verschlusselements (25) eingerichtet ist.

5. Vorrichtung nach Anspruch 4, **dadurch gekennzeichnet, dass** das Verschlusselement (25) einen zum lösbaren Verbinden mit dem freien Ende (24) des Zapfenelements (22) eingerichteten Bajonettverschluss aufweist.

6. Vorrichtung nach einem der Ansprüche 4 oder 5, **dadurch gekennzeichnet, dass** das Verschlusselement (25) und das freie Ende (24) des Zapfenelements (22) jeweils Gewinde aufweisen, so dass das Verschlusselement (25) an das freie Ende (24) des Zapfenelements (22) schraubbar eingerichtet ist.

7. Vorrichtung nach Anspruch 6, **dadurch gekennzeichnet, dass** das Verschlusselement (25) als Verschlussmutter ausgebildet ist und das freie Ende (24) ein zur Aufnahme der Verschlussmutter eingerichtetes Außengewinde aufweist.

8. Vorrichtung nach einem der Ansprüche 3 bis 7, **dadurch gekennzeichnet, dass** das Zapfenelement (22) mit einer Verstelleinheit (27) mechanisch derart verbunden ist, dass die Position des Zapfenelements (22) steuervariabel positionsverstellbar eingerichtet ist.

9. Vorrichtung nach einem der Ansprüche 3 bis 8, **dadurch gekennzeichnet, dass** die Verstelleinheit (27) eine Hydraulikeinheit, eine Pneumatikeinheit oder eine elektrische Linearmotoreinheit ist.

10. Vorrichtung nach Anspruch 8 oder 9, **dadurch gekennzeichnet, dass** die Verstelleinheit (27) in dem Innenraum (21) angeordnet ist.

11. Vorrichtung nach einem der Ansprüche 9 bis 10, **dadurch gekennzeichnet, dass** die Hydraulikeinheit einen Zweikammerhydraulikzylinder umfasst.

12. Vorrichtung nach einem der Ansprüche 4 bis 11, **dadurch gekennzeichnet, dass** das Verschlusselement (25) hohltrommelseitig konisch ausgebildet ist.

13. Vorrichtung nach einem der Ansprüche 2 bis 12, **dadurch gekennzeichnet, dass** die Ausnehmung (19) in dem Rückwandelement (17) der Hohltrommel (10) mindestens einen Durchgangsausnehmungsabschnitt (32) und eine konische Zentrierausnehmung (33) umfasst.

14. Verfahren zum Betreiben einer Vorrichtung zum Trennen von Stoffen unterschiedlicher Fließfähigkeit, wobei die Vorrichtung eine umlaufend angetriebene an einem Antriebselement (11) lösbar angeordnete Hohltrommel (10) mit einer perforierten Mantelfläche, ein von außen an die Hohltrommel (10) unter Umschlingung eines Teils des Umfangs der Hohltrommel (10) anpressbares endloses Pressband (14), das zusammen mit der Hohltrommel (10) einen Einzugskeil (15) für das Pressgut bildet, umfasst,
**dadurch gekennzeichnet, dass**
das Arretieren der Hohltrommel (10) an dem Antriebselement (11) sowie das Lösen von dem Antriebselement (11) mittels eines steuerbeweglichen Haltemittels (16) gesteuert wird.

15. Verfahren nach Anspruch 14, **gekennzeichnet durch** gesteuertes längsaxiales Bewegen eines Zapfenelements (22) des Haltemittels (16) in einem Innenraum (21) der Hohltrommelaufnahme (18), die hohlwellenartig ausgebildet ist.

16. Verfahren nach Anspruch 15, **gekennzeichnet durch** Anordnen des Verschlusselements (25) am freien Ende (24) des Zapfenelements (22).

17. Verfahren nach Anspruch 16, **dadurch gekennzeichnet, dass** das Verschlusselement (25) mittels eines Bajonettverschlusses an dem freien Ende (24) des Zapfenelements (22) angeordnet wird.

18. Verfahren nach einem der Ansprüche 16 oder 17, **dadurch gekennzeichnet, dass** das Verschlusselement (25) mit dem freien Ende (24) des Zapfenelements (22), vorzugsweise nur handfest, verschraubt wird.

19. Verfahren nach einem der Ansprüche 15 bis 18 **gekennzeichnet durch** gesteuertes Verstellen der Position des Zapfenelement (22) mittels einer Verstelleinheit (27), mit der das Zapfenelement (22) mechanisch verbunden ist.

20. Verfahren nach Anspruch 19, **dadurch gekennzeichnet, dass** das Verstellen der Position mittels der Verstelleinheit (27) hydraulisch, pneumatisch und/oder linear elektromotorisch erfolgt.

21. Verfahren nach einem der Ansprüche 19 oder 20, **dadurch gekennzeichnet, dass** die Verstelleinheit (27) in dem Innenraum (21) gesteuert bewegt wird.

## Claims

1. Apparatus for separating materials with different degrees of flowability, comprising a rotationally driven hollow drum (10) with a perforated peripheral surface, which hollow drum is releasably arranged on a drive element (11), a continuous press belt (14) which can be pressed against the hollow drum (10) from the outside while wrapping around a portion of the circumference of the hollow drum (10) and which, together with the hollow drum (10), forms an intake wedge (15) for the material to be pressed,
**characterised in that**
the drive element (11) comprises at least one controllably movable holding means (16) which is configured and adapted to controllably lock the hollow drum (10) on the drive element (11) as well as to controllably release the hollow drum (10) from the drive element (11).

2. Apparatus according to claim 1, **characterised in that** the drive element (11) comprises a hollow drum holder (18), and a rear wall element (17) of the hollow drum (10) has a recess (19) adapted to receive the hollow drum holder (18) in a positive-locking and/or non-positive-locking manner.

3. Apparatus according to claim 2, **characterised in that** the hollow drum holder (18) is adapted in the manner of a hollow shaft, forming an internal space (21), and the holding means (16) comprises a pin element (22) which is arranged in the internal space (21) of the hollow drum holder (18) so as to be controllably movable about the longitudinal axis.

4. Apparatus according to claim 3, **characterised in that** the pin element (22) is adapted at its free end (24) to receive a releasable closing element (25).

5. Apparatus according to claim 4, **characterised in that** the closing element (25) has a bayonet mount adapted to releasably connect to the free end (24) of the pin element (22).

6. Apparatus according to one of claims 4 or 5, **characterised in that** the closing element (25) and the free end (24) of the pin element (22) each have threads such that the closing element (25) is adapted to be screwable to the free end (24) of the pin element (22).

7. Apparatus according to claim 6, **characterised in that** the closing element (25) is configured as a lock nut and the free end (24) has an external thread adapted to receive the lock nut.

8. Apparatus according to any one of claims 3 to 7, **characterised in that** the pin element (22) is mechanically connected to an adjusting unit (27) in such a manner that the position of the pin element (22) is adapted to be positionally adjustable in a controllably variable manner.

9. Apparatus according to any one of claims 3 to 8, **characterised in that** the adjusting unit (27) is a hydraulic unit, a pneumatic unit or a linear electric motor unit.

10. Apparatus according to claim 8 or 9, **characterised in that** the adjusting unit (27) is arranged in the internal space (21).

11. Apparatus according to one of claims 9 to 10, **characterised in that** the hydraulic unit comprises a two-chamber hydraulic cylinder.

12. Apparatus according to any one of claims 4 to 11, **characterised in that** the closing element (25) is configured to be conical on the hollow drum side.

13. Apparatus according to any one of claims 2 to 12, **characterised in that** the recess (19) in the rear wall element (17) of the hollow drum (10) comprises at least one through-recess portion (32) and one conical centring recess (33).

14. Method for operating an apparatus for separating materials with different degrees of flowability, wherein the apparatus comprises a rotationally driven hollow drum (10) with a perforated peripheral surface, which hollow drum is releasably arranged on a drive element (11), a continuous press belt (14) which can be pressed against the hollow drum (10) from the outside while wrapping around a portion of the circumference of the hollow drum (10) and which, together with the hollow drum (10), forms an intake wedge (15) for the material to be pressed,
**characterised in that**
locking the hollow drum (10) on the drive element (11) as well as releasing it from the drive element (11) is controlled by means of a controllably movable holding means (16).

15. Method according to claim 14, **characterised by** controlled moving of a pin element (22) of the holding means (16) about the longitudinal axis in an internal space (21) of the hollow drum holder (18) which is configured in the manner of a hollow shaft.

16. Method according to claim 15, **characterised by** arranging the closing element (25) on the free end (24) of the pin element (22).

17. Method according to claim 16, **characterised in that** the closing element (25) is arranged on the free end (24) of the pin element (22) by means of a bayonet mount.

18. Method according to one of claims 16 or 17, **characterised in that** the closing element (25) is screwed to the free end (24) of the pin element (22), preferably only hand-tight.

19. Method according to any one of claims 15 to 18, **characterised by** controlled adjustment of the position of the pin element (22) by means of an adjusting unit (27) to which the pin element (22) is mechanically connected.

20. Method according to claim 19, **characterised in that** the position is adjusted hydraulically, pneumatically and/or linearly by electric motor by means of the adjusting unit (27).

21. Method according to one of claims 19 or 20, **characterised in that** the adjusting unit (27) is controllably moved in the internal space (21).

## Revendications

1. Dispositif pour séparer des substances ayant des fluidités différentes, comprenant un tambour creux (10) entraîné en rotation agencé de manière amovible sur un élément d'entraînement (11) avec une surface d'enveloppe perforée, une bande de pressage sans fin (14) pouvant être pressée de l'extérieur sur le tambour creux (10) en entourant une partie de la périphérie du tambour creux (10), qui forme conjointement avec le tambour creux (10) une clavette d'introduction (15) pour le produit à presser,
**caractérisé en ce que**
l'élément d'entraînement (11) comprend au moins un moyen de retenue (16) mobile de manière commandée, qui est configuré et adapté pour bloquer de manière commandable le tambour creux (10) sur l'élément d'entraînement (11) ainsi que pour libérer de manière commandable le tambour creux (10) de l'élément d'entraînement (11).

2. Dispositif selon la revendication 1, **caractérisé en ce que** l'élément d'entraînement (11) comprend un logement de tambour creux (18) et un élément de paroi arrière (17) du tambour creux (10) présente un évidement (19) adapté pour recevoir le logement de tambour creux (18) par complémentarité de forme et/ou de force.

3. Dispositif selon la revendication 2, **caractérisé en ce que** le logement de tambour creux (18) est adapté en forme d'arbre creux, formant un espace intérieur (21), et le moyen de retenue (16) comprend un élément de tourillon (22) qui est agencé dans l'espace intérieur (21) du logement de tambour creux (18) de manière à pouvoir être déplacé de manière commandée dans l'axe longitudinal.

4. Dispositif selon la revendication 3, **caractérisé en ce que** l'élément de tourillon (22) est adapté à son extrémité libre (24) pour recevoir un élément de fermeture amovible (25).

5. Dispositif selon la revendication 4, **caractérisé en ce que** l'élément de fermeture (25) présente un verrouillage à baïonnette adapté pour se connecter de manière amovible à l'extrémité libre (24) de l'élément de tourillon (22).

6. Dispositif selon l'une quelconque des revendications 4 ou 5, **caractérisé en ce que** l'élément de fermeture (25) et l'extrémité libre (24) de l'élément de tourillon (22) présentent respectivement des filetages, de telle sorte que l'élément de fermeture (25) est adapté pour pouvoir être vissé sur l'extrémité libre (24) de l'élément de tourillon (22).

7. Dispositif selon la revendication 6, **caractérisé en ce que** l'élément de fermeture (25) est configuré sous forme d'écrou de fermeture et l'extrémité libre (24) présente un filetage extérieur adapté pour recevoir l'écrou de fermeture.

8. Dispositif selon l'une quelconque des revendications 3 à 7, **caractérisé en ce que** l'élément de tourillon (22) est relié mécaniquement à une unité de réglage (27) de telle sorte que la position de l'élément de tourillon (22) est adaptée de manière à pouvoir être réglée en position de manière variable par commande.

9. Dispositif selon l'une quelconque des revendications 3 à 8, **caractérisé en ce que** l'unité de réglage (27) est une unité hydraulique, une unité pneumatique ou une unité de moteur linéaire électrique.

10. Dispositif selon la revendication 8 ou 9, **caractérisé en ce que** l'unité de réglage (27) est agencée dans l'espace intérieur (21).

11. Dispositif selon l'une quelconque des revendications 9 à 10, **caractérisé en ce que** l'unité hydraulique comprend un vérin hydraulique à deux chambres.

12. Dispositif selon l'une quelconque des revendications 4 à 11, **caractérisé en ce que** l'élément de fermeture (25) est configuré sous forme conique du côté du tambour creux.

13. Dispositif selon l'une quelconque des revendications 2 à 12, **caractérisé en ce que** l'évidement (19) dans l'élément de paroi arrière (17) du tambour creux (10) comprend au moins une section d'évidement traversant (32) et un évidement de centrage conique (33).

14. Procédé d'exploitation d'un dispositif pour séparer des substances ayant des fluidités différentes, le dispositif comprenant un tambour creux (10) entraîné en rotation agencé de manière amovible sur un élément d'entraînement (11) avec une surface d'enveloppe perforée, une bande de pressage sans fin (14) pouvant être pressée de l'extérieur sur le tambour creux (10) en entourant une partie de la périphérie du tambour creux (10), qui forme conjointement avec le tambour creux (10) une clavette d'introduction (15) pour le produit à presser,
**caractérisé en ce que**
le blocage du tambour creux (10) sur l'élément d'entraînement (11) ainsi que la libération de l'élément d'entraînement (11) sont commandés au moyen d'un moyen de retenue (16) mobile de manière commandée.

15. Procédé selon la revendication 14, **caractérisé par** un déplacement longitudinal axial commandé d'un élément de tourillon (22) du moyen de retenue (16) dans un espace intérieur (21) du logement de tambour creux (18), qui est configuré sous forme d'arbre creux.

16. Procédé selon la revendication 15, **caractérisé par** l'agencement de l'élément de fermeture (25) à l'extrémité libre (24) de l'élément de tourillon (22).

17. Procédé selon la revendication 16, **caractérisé en ce que** l'élément de fermeture (25) est agencé sur l'extrémité libre (24) de l'élément de tourillon (22) au moyen d'une fermeture à baïonnette.

18. Procédé selon l'une quelconque des revendications 16 ou 17, **caractérisé en ce que** l'élément de fermeture (25) est vissé à l'extrémité libre (24) de l'élément de tourillon (22), de préférence uniquement à la main.

19. Procédé selon l'une quelconque des revendications 15 à 18, **caractérisé par** le réglage commandé de la position de l'élément de tourillon (22) au moyen d'une unité de réglage (27) à laquelle l'élément de tourillon (22) est relié mécaniquement.

20. Procédé selon la revendication 19, **caractérisé en ce que** le réglage de la position au moyen de l'unité de réglage (27) est effectué de manière hydraulique, pneumatique et/ou par moteur électrique linéaire.

21. Procédé selon l'une quelconque des revendications 19 ou 20, **caractérisé en ce que** l'unité de réglage (27) est déplacée de manière commandée dans l'espace intérieur (21).
